Europäisches Patentamt

European Patent Office

Office européen des brevets

(11) Publication number: **0 235 960**
A2

## (12) EUROPEAN PATENT APPLICATION

(21) Application number: **87300971.6**

(22) Date of filing: **04.02.87**

(51) Int. Cl.⁴: **B60G 9/00** , B60G 11/22

(30) Priority: **05.02.86 GB 8602821**

(43) Date of publication of application:
**09.09.87 Bulletin  87/37**

(84) Designated Contracting States:
**BE DE ES FR GB IT SE**

(71) Applicant: **Tadchurch Limited**
**Unit K, Tyson Courtyard, Weldon Industrial**
**Estate (South)**
**Corby, Northants, NN18 8AZ(GB)**

(72) Inventor: **Saunders, Thomas Goodwin**
**2 Belgrave Road**
**Uppingham Leicestershire(GB)**

(74) Representative: **Cundy, Anthony Brian et al**
**Anthony Cundy & Company 384 Station**
**Road Dorridge**
**Solihull West Midlands B93 8ES(GB)**

(54) Vehicle suspensions.

(57) A vehicle suspension system includes a pair of longitudinally extending beams (16). Each beam - (16) is mounted intermediate of its ends (20,21) to the outside of one of a pair of longitudinal chassis members (14) by means of a transverse pivot pin - (18). One end (20) of each beam (16) is connected to the adjacent end of an axle (12) and the other end (21) is connected to spring means (25) attached to the chassis (11), the spring means (25) opposing downward movement of that end (21) of the beam - (16) relative to the chassis (11).

FIG 1

EP 0 235 960 A2

## VEHICLE SUSPENSIONS

This invention relates to vehicles suspensions and in particular to a single axle vehicle suspension.

Hitherto, in order to increase the ground clearance of vehicles, it has been common to mount vehicle suspension components between the longitudinal members of the vehicle chassis. On some vehicles, for example refuse carts, the space between the chassis members is limited.

The present invention provides a suspension system in which most of the components are positioned outside the longitudinal chassis members and which is suitable for vehicles with limited ground clearance. The construction also permits access to the suspension components from the side of the vehicle, for maintenance or replacement purposes.

According to one aspect of the present invention, a suspension system for providing a compliant mounting between a vehicle chassis and an axle includes; a pair of longitudinally extending beams disposed one on either side of the vehicle chassis; each beam being pivotted to the chassis, at a point intermediate of its ends, the axis of the pivot being at right angles to the longitudinal axis of the vehicle; one end of each beam being connected to the adjacent end of the axle and spring means acting betweenthe other end of each beam and the chassis to oppose downward movement of that end of the beam relative to the chassis.

Preferably, the spring means comprises an elastomeric spring. The elastomeric spring will preferably comprise two spring units, each comprising layers of elastomeric material interposed with rigid plates, said spring units being mutually inclined so that the rigid plates of one spring unit diverge upwardly with respect to the rigid plates of the other spring unit. A wedge assembly is clamped to the mutually inclined upper faces of the two spring units, said wedge assembly extending downwardly between the spring units to provide attachment means for the beam. The spring units may be disposed longitudinally or transversely of the vehicle chassis and are preferably mounted on the side of the main longitudinal chassis member.

The suspension may also include additional means of locating the axle with respect to the chassis. For example, a torsion member may be connected from each side of the chassis to a central point on the axle, to prevent rotation of the axle about its own axis and also provide further longitudinal and lateral location. The suspension may also include damping means.

The axle may be a driving axle or a non-driving axle.

An embodiment is now described, by way of example only, with reference to the accompanying drawings in which:-

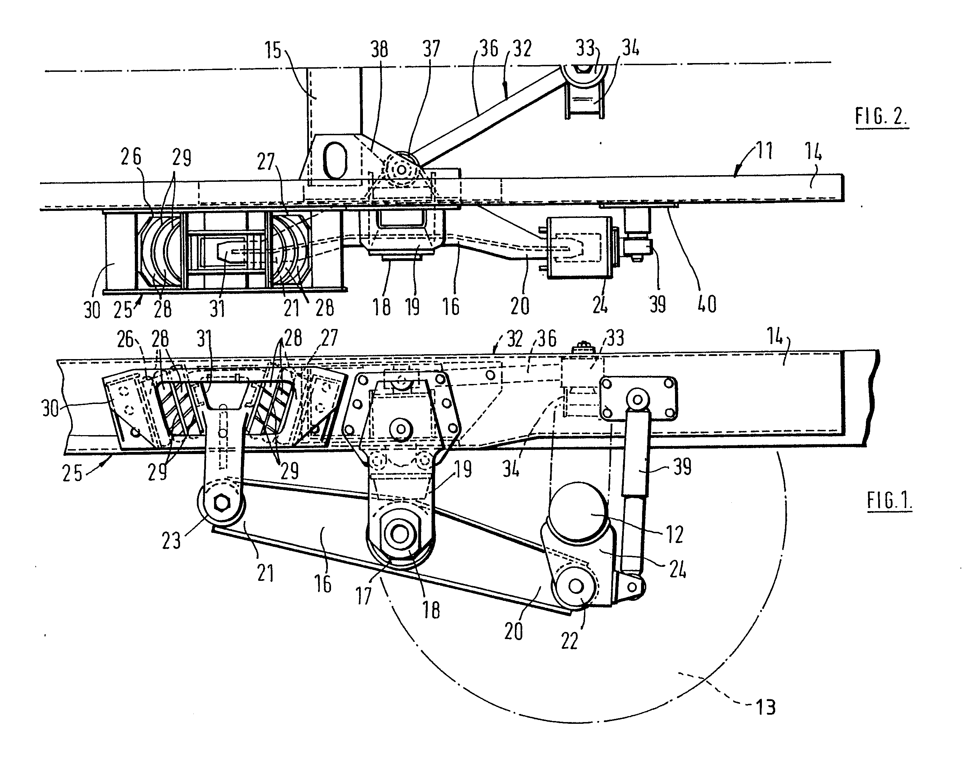

Figure 1 is a side elevation of a vehicle suspension in accordance with the present invention;

Figure 2 is a plan view, from the centre line of the suspension shown in Figure 1, and

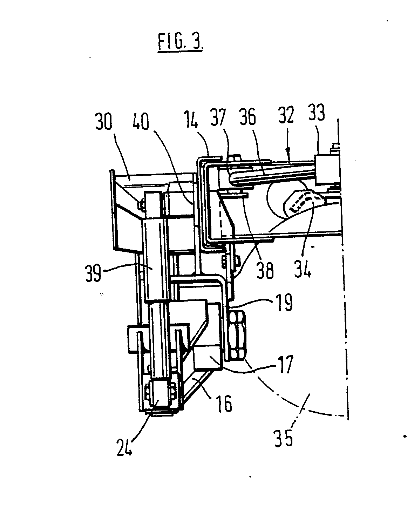

Figure 3 is an end elevation, from the centre line, of the suspension shown in Figure 1.

The suspension shown in the drawings is intended to support the chassis 11 of a vehicle from an axle 12, which in turn is supported on road wheels 13. The suspension also has to allow vertical movement of the chassis 11 against spring loading and allow the chassis 11 to roll. Although the chassis 11 is carried on the axle 12, it is conventional to refer location of and support for the axle 12 with respect to the chassis 11 and that convention will be followed in the specification.

The suspension is identical, although of opposite hand, on both sides of the chassis 11 and consequently only one side of the suspension is illustrated in the drawings and will be described in the following description.

The chassis 11 comprises a pair of longitudinal members 14 which are interconnected at spaced locations by a plurality of cross members 15. The axle 12 is disposed transversely of the chassis 11, the ends extending beyond the longitudinal members 14 of the chassis 11 and being provided with hub assemblies to which the road wheels 13 may be attached.

A main suspension beam 16 is provided on each side of the chassis 11. Each beam 16 is a welded steel fabrication of generally I-section. A phospher-bronze bush 17 is provided in the central portion of the beam 16, by which it is pivotally connected about a pivot pin 18 to a chassis bracket 19 extending downwardly from the chassis 11 on the outside of longitudinal member 14.

The ends 20 and 21 of the beam 16 are cranked away from the vertical projection of the longitudinal member 14 and are provided with spherical rubber bushes 22 and 23. The trailing end 20 of the beam 16 is connected via bush 22 to a bracket 24 extending down from the axle 12 adjacent the end thereof.

An elastomeric spring 25 includes a pair of spring units 26 and 27 each made up of a plurality of layers 28 of elastomeric material interposed with rigid plates 29 to which the layers 28 are bonded. Spring units 26 and 27 are mounted longitudinally of one another against the outer side of longitudinal member 14, in a frame 30. The spring units 26 and 27 form an "inclined shear pair" being mounted in the frame 30 so that they are mutually inclined, the plates 29 of one spring 26 diverging upwardly with respect to plates 29 of the other spring 27.

A wedge assembly 31 is mounted between the diverging upper faces of spring units 26 and 27, the wedge member 21 extending downwardly between the spring units 26 and 27 and being connected to end 21 of beam 16 by means of bush 23.

By virtue of its nature and its position, the spring 25 will oppose vertical loads applied to the beam 16 through axle 12. The spring units 26 and 27 are such that the layers 28 of elastomeric material are loaded partially in compression and partially in shear between adjacent plates 29. In an alternative embodiment, the spring units 26 and 27 may be positioned transversely of one another, so as to provide additional compliant lateral location of the beam 16.

A V-shaped torque member 32 (only one arm shown) is connected via a spherical rubber bush 33 at its apex to a bracket 34 extending upwardly from the middle of the axle 12, in this case the differential housing 35. The end of the arms 36 of the torque assembly 32 are connected via spherical bushes 37 to brackets 38 mounted on the inside of longitudinal chassis members 14. The torque assembly 32 being spaced above the beams 16 provides location of the axle against rotation about its own axis and also provides additional longitudinal and lateral location of the axle. A telescopic shock absorber 39 is connected between the axle bracket 24 and a bracket 40 mounted on the outside of longitudinal member 14.

With the suspension described above, the major components are positioned outside the longitudinal members 14 where there are fewer restrictions on space and the components are easily accessible from the side of the vehicle. Furthermore, the spring 25 is mounted within the depth of the chassis 11 and consequently the spacing between the chassis and axle may be reduced within the limits of the axle movement required. Also, there is very little need for parts of the suspension or chassis to extend significantly beyond the axle. These can be particularly attractive features for tipper vehicles and other specialist vehicles requiring wheels near the back of the chassis. The relatively open rearward region of the axle also provides a convenient location for other components, for example, brake actuators.

The suspension described above is also particularly suitable for narrow chassis vehicles. Conventional leaf spring suspensions are not suitable for such vehicles because attachment of the spring to the axle will be well inboard which will result in poor roll stability. With the suspension disclosed herein, even with narrow chassis vehicles, the ends of the beams 16 may be offset sufficiently to allow them to be connected to the axle adjacent its ends, thereby improving the roll stability.

Although the invention has been described in relation to a driving axle 12 having a differential 35, and a propeller shaft (not shown) providing a driving connection to the differential, the invention could equally well be applied to a non-driven axle.

Various modifications may be made without departing from the invention. For example, while it is preferred to use elastomeric springs of the form described above, other forms of elastomeric spring, for example elastomeric springs of toroidal configuration, or even conventional helical compression springs or leaf springs may be used. Where damping means are included between the axle and chassis, these may be connected between the axle bracket and chassis as illustrated in the drawings or between the chassis and beam 16 on either side of the pivot 18. Alternatively, in the embodiment illustrated in the accompanying drawings the damping means could be arranged to act directly on the wedge assembly 31.

Furthermore the phosphor-bronze bush 17 may be replaced by a solid bush made from any other suitable bearing material or may be replaced by for example, a roller or ball bearing. With such bushes or bearings, the rubber bush 22 between the axle bracket 24 and beam 16 will attentuate the transmission of vibrations from the axle 12 to the beam 16 and thence to the chassis 11. Alternatively an elastomeric bush comprising a cylindrical sleeve of rubber sandwiched between concentric steel sleeves may replace bush 17 and will serve to isolate vibrations in the beam 16 from the chassis 11 while also allowing some lateral compliance of the axle 12.

## Claims

1. A suspension system for providing a compliant mounting between a vehicle chassis and an axle characterised in that said suspension system includes a pair of longitudinally extending beams (16) disposed one on either side of the vehicle chassis (11); each beam (16) being pivotted to the chassis (11), at a point intermediate of its ends, the axis of the pivot (18) being at right angles to the longitudinal axis of the vehicle; one end (20) of each beam (16) being connected to the adjacent end of the axle (12) and spring means (25) acting between the other end (21) of each beam (16) and the chassis (11) to oppose downward movement of that end (21) of the beam (16) relative to the chassis (11).

2. A suspension system according to Claim 1 characterised in that the spring means (25) includes an elastomeric spring.

3. A suspension according to Claim 2 characterised in that the .elastomeric spring (25) comprises a pair of elastomeric spring units (26,27), each spring unit (26,27) having layers (28) of elastomeric material interposed with rigid plates - (29), said spring units (26,27) being mutually inclined so that the rigid plates (29) of one spring unit (26) diverge upwardly with respect to the rigid plates (29) of the other spring unit (27).

4. A suspension system according to Claim 3 characterised in that a wedge assembly (31) is clamped to the mutually inclined upper faces of the two spring units (26,27), said wedge assembly (31) extending downwardly between the spring units - (26,27) to provide means for attachment (23) to the beam (16).

5. A suspension system according to any one of claims 1 to 4 characterised in that the spring units (26,27) are disposed longitudinally relative to one another.

6. A suspension system according to any one of claims 1 to 4 characterised in that the spring units (26,27) are disposed transversely relative to one another.

7. A suspension system according to any one of the preceding claims characterised in that the spring means (25) is mounted against the side of a longitudinal chassis member (14).

8. A suspension system according to any one of the preceding claims characterised in that location means (36) is provided between the vehicle chassis (11) and a central point (33) on the axle - (12).

9. A suspension system according to any one of the preceding claims characterised in that damping means (39) is provided between the vehicle axle (12) and the chassis (11).

FIG. 2.

FIG. 1.

## FIG. 3.